# EUROPÄISCHE PATENTSCHRIFT

(11) **EP 0 706 910 B1**
(45) Veröffentlichungstag und Bekanntmachung des Hinweises auf die Patenterteilung: **29.04.1998**
(21) Anmeldenummer: 95890164.7
(22) Anmeldetag: 18.09.1995
(51) Int. Cl.: B60M 1/28

(54) **Maschine zum kontinuierlichen Verlegen eines Fahrdrahtes einer elektrischen Oberleitung**
Machine for the continuous installing of a power line of an electrical catenary
Machine de pose en continu du câble d'alimentation d'un caténaire électrique

(30) Priorität: 12.10.1994 AT 1926/94
(43) Veröffentlichungstag der Anmeldung: 17.04.1996
(73) Patentinhaber: Franz Plasser Bahnbaumaschinen- Industriegesellschaft m.b.H., 1010 Wien (AT)
(72) Erfinder: Oellerer, Friedrich, A-4040 Linz (AT); Gruber, Leopold Rudolf, A-3270 Scheibbs (AT)

(56) Entgegenhaltungen:
- EP-A- 0 416 136
- DE-A- 2 012 248
- US-A- 4 213 596

## Beschreibung

Die Erfindung betrifft eine Maschine zum kontinuierlichen Verlegen eines Fahrdrahtes und/oder eines Tragseiles einer elektrischen Oberleitung eines Gleises unter Aufrechterhaltung der für die verlegte Oberleitung vorgeschriebenen Zugspannung, mit einem auf Schienenfahrwerken abgestützten Maschinenrahmen, einer um eine Trommelachse drehbaren und in Achslängsrichtung verschiebbar gelagerten Drahttrommel, einem höhen- und seitenverstellbaren Kranausleger mit einer drehbar gelagerten Umlenkrolle und einer in Abzugsrichtung des Fahrdrahtes zwischen Drahttrommel und Umlenkrolle positionierten Zugspannungsvorrichtung, die eine Bremseinrichtung zur Aufbringung der vorschriftsmäßigen Zugspannung bei kontinuierlicher Arbeitsvorfahrt der Maschine aufweist.

Aus der EP 0 416 136 B1 ist bereits eine derartige Maschine bekannt, mit der der Fahrdraht und das Tragseil einer Oberleitung eines Eisenbahngleises gemeinsam kontinuierlich verlegt und während der Montage unter der erforderlichen Zugspannung gehalten werden. Fahrdraht und Tragseil werden dabei von jeweils einer auf dem Maschinenrahmen gelagerten Drahttrommel abgespult und durchlaufen eine Zugspannungsvorrichtung, um anschließend über je eine eigene, verstellbare Umlenkrolle in die höhen- und seitenmäßig korrekte Verlegeposition gebracht zu werden. Die beiden Zugspannungsvorrichtungen sind mit je einer Bremseinrichtung ausgestattet, mit deren Hilfe die Zugspannung der verlegten Oberleitung den Bahnvorschriften entsprechend reguliert wird, während die Maschine kontinuierlich entlang des Gleises vorfährt. Jede Drahttrommel ist in Längsrichtung der Trommelachse verschiebbar auf einem eigenen Tragrahmen - zusammen mit der zugeordneten Zugspannungsvorrichtung - angeordnet, wobei diese Trommelachse im wesentlichen horizontal und in Maschinenquerrichtung verläuft.

Eine weitere Maschine zum Installieren eines Fahrdrahtes einer Gleisoberleitung ist in der US 4,213,596 beschrieben. Der Fahrdraht ist auf einer mit Bremskraft beaufschlagbaren Drahttrommel gespeichert, die mit in Maschinenquerrichtung bzw. horizontal verlaufender Achse auf einem gleisverfahrbaren Maschinenrahmen gelagert ist. Auf nachfolgenden Maschinenrahmen befinden sich höhen- und seitenverstellbare Führungseinrichtungen, mittels derer der Draht in der gewünschten Lage während der Montage positioniert wird.

Die Aufgabe der vorliegenden Erfindung besteht nun in der Schaffung einer gattungsgemäßen Maschine, mit der auch jene Drahtrommeln problemlos abwickelbar sind, bei denen der Fahrdraht mit einer etwa parallel zur Trommelachse verlaufenden Symmetrieebene auf die Trommel aufgewickelt ist.

Diese Aufgabe wird mit einer eingangs beschriebenen Maschine dadurch gelöst, daß die Drahttrommel mit ihrer Trommelachse in vertikaler Richtung verlaufend angeordnet ist und daß die Zugspannungsvorrichtung und/oder die Drahttrommel durch einen Antrieb senkrecht zur Maschinenlängsrichtung verschiebbar gelagert ist bzw. sind.

Durch diese Ausbildung ist bereits mit der Positionierung der Drahttrommel der Fahrdraht bezüglich seiner Symmetrieebene in der Montageposition zur Abwicklung bereitgestellt. In Verbindung mit der verschiebbaren Lagerung der Zugspannungsvorrichtung und bzw. oder der Drahtrommel ist unter Vermeidung einer Verbiegung eine vom Abwickelfortschritt unabhängige geradlinige Abwicklung des Fahrdrahtes sichergestellt.

Im folgenden wird die Erfindung anhand von Zeichnungen näher erläutert.

Es zeigen:
Fig. 1 eine Seitenansicht einer Maschine zum kontinuierlichen Verlegen einer Oberleitung eines Gleises mit einer Drahttrommel zum Abwickeln von Fahrdraht,
Fig. 2 eine Draufsicht auf die Maschine, und
Fig. 3 eine vergrößerte Detailseitenansicht der verschiebbar gelagerten Drahttrommel gemäß Pfeil III in Fig. 2.

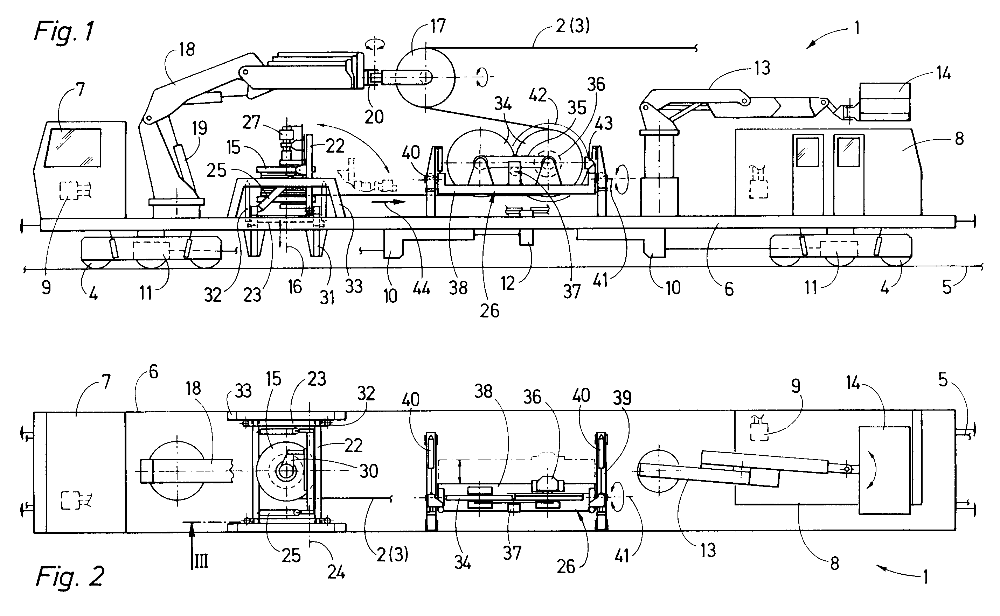

Eine in Fig. 1 und 2 dargestellte Maschine 1 zum kontinuierlichen Verlegen eines Fahrdrahtes 2 und/oder eines Tragseiles 3 einer elektrischen Oberleitung weist einen über Schienenfahrwerke 4 auf einem Gleis 5 abgestützten Maschinenrahmen 6 auf. An diesem sind jeweils endseitig eine Fahrkabine 7 bzw. eine Arbeitskabine 8 angeordnet, die mit Steuereinrichtungen 9 versehen sind. Auf einem der Arbeitskabine 8 benachbarten, rotierbaren Schwenkkran 13 ist eine höhenverstellbare Arbeitsbühne 14 horizontal verschwenkbar gelagert. Zwei mit dem Maschinenrahmen 6 verbundene Antriebsaggregate 10 dienen der Beaufschlagung von Fahrantrieben 11 der Schienenfahrwerke 4 sowie einer Hydraulikpumpe 12 zur Energieversorgung der weiteren, noch zu beschreibenden Antriebe der Maschine 1.

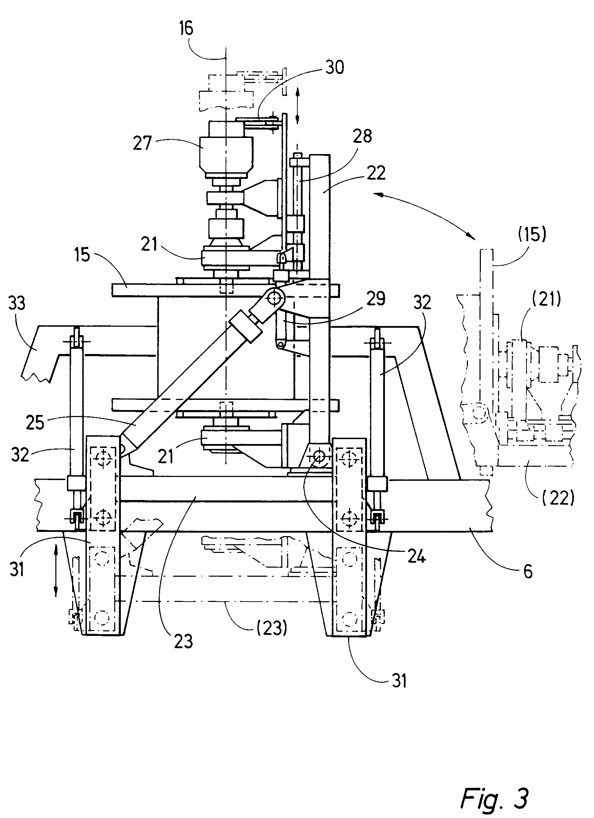

Eine Drahttrommel 15, auf der der zu verlegende Fahrdraht 2 bzw. das Tragseil 3 aufgerollt ist, ist um eine Trommelachse 16 drehbar sowie in Achslängsrichtung verschiebbar auf dem Maschinenrahmen 6 gelagert, wie anhand der Fig. 3 genauer ersichtlich ist. Von der Drahttrommel 15 in Maschinenlängsrichtung distanziert bzw. dieser in Abzugsrichtung (s. Pfeil 44) des Fahrdrahtes 2 nachgeordnet ist eine Zugspannungsvorrichtung 26 ersichtlich, der wiederum eine drehbar gelagerte Umlenkrolle 17 nachgeordnet ist. Diese befindet sich am freien Ende eines über Antriebe 19 höhen- und seitenverstellbaren Kranauslegers 18 und ist mit diesem über ein allseits wirksames Gelenk 20 verbunden.

Wie insbesondere in Fig. 3 detailliert dargestellt, ist die Drahttrommel 15 mittels Lagerstützen 21 auf einer Trommelhalterung 22 befestigt, die auf einem Tragrahmen 23 um eine horizontale, in Maschinenquerrichtung verlaufende Schwenkachse 24 verschwenkbar gelagert ist. Ein Antrieb 25 ermöglicht eine gemeinsame Verschwenkung der Trommelhalterung 22 und der Drahttrommel 15 um 90° von einer Arbeitsposition, in der die Trommelachse 16 in vertikaler Richtung verläuft, in eine zweite Position, in der die Trommelachse 16 waagrecht angeordnet ist. Diese in strichpunktierten Linien gezeichnete Stellung wird zum Auswechseln der Drahttrommel 15 eingenommen. Zu diesem Zweck ist die eine Lagerstütze 21 mitsamt einem der Drahttrommel 15 zugeordneten Drehantrieb 27 auf einer Gleitschiene 28 gelagert und in Längsrichtung der Trommelachse 16 mittels eines Antriebes 29 relativ zur Trommelhalterung 22 verschiebbar ausgebildet. Dadurch können die beiden Lagerstützen 21 zum Ein- bzw. Ausbau der Drahttrommel 15 voneinander distanziert werden. Der Drehantrieb 27 ist mit einer Drehmomentstütze 30 ausgestattet.

Der Tragrahmen 23 ist nun mitsamt der Drahttrommel 15 und der Trommelhalterung 22 entlang von Führungen 31 in vertikaler Richtung verschiebbar am Maschinenrahmen 6 gelagert. Zur Durchführung dieser Höhenverstellung senkrecht zur Maschinenlängsrichtung dienen Antriebe 32, die an einer mit dem Maschinenrahmen 6 verbundenen Stütze 33 und am Tragrahmen 23 angelenkt sind. Der (in Fig. 3 nicht gezeigte) Fahrdraht 2 ist auf der Drahttrommel 15 so aufgerollt, daß er - bei vertikaler Arbeitsstellung der Trommel - bereits in der richtigen, der verlegten Endposition entsprechenden Stellung mit einer vertikalen Symmetrieebene liegt. Durch das vertikale Verstellen bzw. Nachstellen der Drahttrommel 15 während des Abziehens des Fahrdrahtes 2 von der Trommel wird sichergestellt, daß dieser immer horizontal in die Zugspannungsvorrichtung 26 eingeleitet wird (s. Fig. 1), wodurch ein Knicken des Drahtes beim Abrollen von der Drahttrommel 15 weitestgehend vermieden wird.

Die Zugspannungsvorrichtung 26 besteht im wesentlichen aus zwei - Rillen aufweisenden - Umlenkrollen 34 mit relativ großem Durchmesser, die in Maschinenlängsrichtung hintereinander angeordnet und anhand einer Antriebskette 35 miteinander gekoppelt sind, wobei eine der Umlenkrollen 34 über eine Bremseinrichtung 36 beaufschlagbar ist. Die Antriebskette 35 wird mittels einer Spannvorrichtung 37 unter der korrekten Spannung gehalten. Die beiden Umlenkrollen 34 sind auf einem Schwenkrahmen 38 montiert, der auf horizontalen, senkrecht zur Maschinenlängsrichtung verlaufenden Führungen 39 anhand von Antrieben 40 in Maschinenquerrichtung verschiebbar und zusätzlich um eine parallel zur Maschinenlängsrichtung ausgerichtete Achse 41 relativ zu den Führungen 39 verschwenkbar ausgebildet ist. Die mit der Bremseinrichtung 36 verbundene Umlenkrolle 34 ist außerdem mit einer Bremsscheibe 42 ausgestattet, die mit einer Notbremse 43 zusammenwirkt, um bei einem eventuellen Versagen der Bremseinrichtung 36 ein unkontrolliertes Abziehen des Fahrdrahtes 2 zu verhindern. Die Querverschiebung des Schwenkrahmens 38 gewährleistet, daß der von der Drahttrommel 15 abgezogene Fahrdraht 2 genau fluchtend in die Rillen der Umlenkrolle 34 eingeführt wird, so daß ein Abrutschen des Drahtes von der Rolle vermieden wird.

Alternativ wäre es auch möglich, die Drahttrommel 15 unverschiebbar am Maschinenrahmen 6 zu lagern, während die Zugspannungsvorrichtung 26 parallel zur Querverschiebung auch in vertikaler Richtung verstellbar gelagert ist. Andererseits könnte man aber auch die Zugspannungsvorrichtung 26 unverschiebbar am Maschinenrahmen 6 befestigen, während die Drahttrommel 15 sowohl höhen- als auch querverschiebbar ausgebildet ist.

Die Arbeitsweise der Zugspannungsvorrichtung 26 bzw. der Bremseinrichtung 36 zur Aufbringung der vorschriftsmäßigen Zugspannung bei kontinuierlicher Arbeitsvorfahrt der Maschine 1 beim Verlegen einer Oberleitung eines Gleises unter Aufrechterhaltung der für die verlegte Oberleitung vorgeschriebenen Zugspannung ist im Prinzip bekannt und ist beispielsweise in der EP 0 416 136 B1 genau beschrieben, ebenso wie die Funktionsweise der gelenkig gelagerten Umlenkrolle 17.

## Patentansprüche

1. Maschine zum kontinuierlichen Verlegen eines Fahrdrahtes und/oder eines Tragseiles einer elektrischen Oberleitung eines Gleises unter Aufrechterhaltung der für die verlegte Oberleitung vorgeschriebenen Zugspannung, mit einem auf Schienenfahrwerken (4) abgestützten Maschinenrahmen (6), einer um eine Trommelachse (16) drehbaren und in Achslängsrichtung verschiebbar gelagerten Drahttrommel (15), einem höhen- und seitenverstellbaren Kranausleger (18) mit einer drehbar gelagerten Umlenkrolle (17) und einer in Abzugsrichtung des Fahrdrahtes (2) zwischen Drahttrommel (15) und Umlenkrolle (17) positionierten Zugspannungsvorrichtung (26), die eine Bremseinrichtung (36) zur Aufbringung der vorschriftsmäßigen Zugspannung bei kontinuierlicher Arbeitsvorfahrt der Maschine (1) aufweist, dadurch gekennzeichnet, daß die Drahttrommel (15) mit ihrer Trommelachse (16) in vertikaler Richtung verlaufend angeordnet ist und daß die Zugspannungsvorrichtung (26) und/oder die Drahttrommel (15) durch einen Antrieb (32,40) senkrecht zur Maschinenlängsrichtung verschiebbar gelagert ist bzw. sind.

2. Maschine nach Anspruch 1, dadurch gekennzeichnet, daß die Zugspannungsvorrichtung (26) auf einem durch senkrecht zur Maschinenlängsrichtung und horizontal verlaufende Führungen (39) verschiebbaren Schwenkrahmen (38) befestigt ist, der um eine in Maschinenlängsrichtung verlaufende Achse (41) relativ zu den Führungen (39) verschwenkbar ausgebildet ist.

3. Maschine nach Anspruch 1 oder 2, dadurch gekennzeichnet, daß die Drahttrommel (15) auf einem Tragrahmen (23) gelagert ist, der durch Antriebe (32) in vertikaler Richtung entlang von Führungen (31) verschiebbar am Maschinenrahmen (6) gelagert ist.

4. Maschine nach Anspruch 3, dadurch gekennzeichnet, daß der höhenverstellbare Tragrahmen (23) mit einer Trommelhalterung (22) verbunden ist, die durch einen Antrieb (25) um eine senkrecht zu den Führungen (31) des Tragrahmens (23) und horizontal verlaufende Schwenkachse (24) in einem Winkel von 90° verschwenkbar ausgebildet ist.

## Claims

1. A machine for continuously installing a contact wire and/or a carrying cable of an electrical overhead line of a track while maintaining the tensile stress prescribed for the installed overhead line, comprising a machine frame (6) supported on on-track undercarriages (4), a wire drum (15) rotatable about a drum axis (16) and mounted for displacement in the longitudinal direction of the axis, a vertically and transversely adjustable crane jib (18) having a rotatably mounted deflecting pulley (17), and a tensile stress device (26) positioned between the wire drum (15) and the deflecting pulley (17) in the direction of pulling off the contact wire (2), the tensile stress device (26) containing a braking means (36) for applying the prescribed tensile stress during continuous working advance of the machine (1), characterized in that the wire drum (15) is arranged with its drum axis (16) extending in a vertical direction, and that the tensile stress device (26) and/or the wire drum (15) is/are mounted for displacement perpendicularly to the longitudinal direction of the machine by means of a drive (32,40).

2. A machine according to claim 1, characterized in that the tensile stress device (26) is fastened to a pivot frame (38) which is displaceable by means of guides (39) extending perpendicularly to the longitudinal direction of the machine and horizontally, the pivot frame (38) being designed for pivoting relative to the guides (39) about an axis (41) extending in the longitudinal direction of the machine.

3. A machine according to claim 1 or 2, characterized in that the wire drum (15) is mounted on a support frame (23) which is mounted on the machine frame (6) for displacement in a vertical direction along guides (31) by means of drives (32).

4. A machine according to claim 3, characterized in that the vertically adjustable support frame (23) is connected to a drum mount (22) which is designed for pivoting through a 90°-angle about a pivot axis (24), extending perpendicularly to the guides (31) of the support frame (23) and horizontally, by means of a drive (25).

## Revendications

1. Machine de pose en continu d'un fil de contact et/ou d'un câble porteur d'une catenaire électrique d'une voie en respectant la tension de traction prescrite pour la catenaire posée, avec un châssis de machine (6) prenant appui sur des trains de roulement sur rails (4), un tambour de fil (15) apte à tourner autour d'un axe de tambour (16) et logé de manière déplaçable dans la direction longitudinale de l'axe, une flèche (18) réglable en hauteur et vers les côtés avec un galet de renvoi (17) logé à rotation et un dispositif de mise sous tension (26) positionné dans la direction de déroulement du fil de contact (2) entre le tambour de fil (15) et le galet de renvoi (17), qui présente un dispositif de freinage (36) pour appliquer la tension de traction prescrite lors de l'avance continue pour le travail de la machine (1), caractérisée en ce que le tambour de fil (15), avec son axe de tambour (16), est disposé pour s'étendre dans la direction verticale et en ce que le dispositif de mise sous tension (26) et/ou le tambour de fil (15) sont logés de manière déplaçable par une commande (32, 40) perpendiculairement à la direction longitudinale de la machine.

2. Machine selon la revendication 1, caractérisée en ce que le dispositif de mise sous tension (26) est fixé sur un châssis pivotant (38) déplaçable sur des guidages (39) s'étendant perpendiculairement à la direction longitudinale de la machine et horizontalement et qui est réalisé de manière pivotante autour d'un axe (41) s'étendant dans la direction longitudinale de la machine relativement aux guidages (39).

3. Machine selon la revendication 1 ou 2, caractérisée en ce que le tambour de fil (15) est logé sur un châssis de support (23) qui est logé de manière déplaçable au châssis de machine (6), par des commandes (32) dans la direction verticale le long de guidages (31).

4. Machine selon la revendication 3, caractérisée en ce que le châssis de support (23) réglable en hauteur est relié à une fixation de tambour (22) qui est réalisée de manière pivotante suivant un angle de 90° par une commande (25) autour d'un axe de pivotement (24) s'étendant perpendiculairement aux guidages (31) du châssis de support (23) et horizontalement.
